# DEMANDE DE BREVET EUROPEEN

(11) **EP 1 867 463 A1**
(43) Date de publication de la demande: **19.12.2007**
(21) Numéro de dépôt: 07110378.2
(22) Date de dépôt: 15.06.2007
(51) Int. Cl.: B29C 65/20, B29C 45/14, B60J 10/08

(54) **Procédé de jonction de brins par soudure miroir**

(30) Priorité: 16.06.2006 FR 0652527
(71) Demandeur: Cooper-Standard Automotive France S.A., 95100 Argenteuil (FR)
(72) Inventeur: Veille, Jean-Marc, 35000 Rennes (FR); Gaudry, Thierry, 75013 Paris (FR); David, Jean-Luc, 35500 Taillis (FR)
(74) Mandataire: Barbin le Bourhis, Joël

(57) **Abrégé**

L'invention concerne un procédé pour la réalisation d'une jonction entre deux brins (10, 20). Le procédé comprend la découpe de chacun des deux brins selon un angle avec son axe longitudinal de façon à obtenir une surface de découpe (13, 23) sur chaque brin. La jonction des surfaces de découpe des deux brins est réalisée par soudure miroir.

## Description

La présente invention concerne un procédé de jonction entre deux brins comprenant la découpe de chacun des deux brins selon un angle avec son axe longitudinal de façon à obtenir une surface de découpe sur chacun des brins.

Dans les pièces de carrosserie comportant une vitre, et notamment une vitre coulissante comme en comporte une portière de véhicule automobile, il est nécessaire d'avoir une bonne étanchéité de la vitre avec le cadre métallique qui l'entoure afin de pouvoir isoler l'habitacle du véhicule de l'environnement extérieur. L'étanchéité entre les vitres, fixes et/ou mobiles, et le cadre qui les entoure est réalisée grâce à un joint monté sur le cadre. Ce joint est typiquement réalisé en caoutchouc ou en matériau plastique (en général un thermoplastique) comportant des régions rigides et des régions plus souples. Il est en général extrudé, et prend donc la forme d'un brin rectiligne de section constante, cette section possédant un profil particulier. Il peut également être moulé. Aux endroits où le cadre n'est pas rectiligne et change de direction trop fortement voire même où il forme un angle, l'épaisseur et le profil souvent complexe du brin font que ce brin ne peut être plié suffisamment pour rester en contact intime avec le cadre. Le brin doit donc être réalisé en deux morceaux qui se rejoignent à l'endroit du changement de direction le plus important ou à l'angle du cadre. Les deux morceaux du brin doivent alors être joints entre eux de façon étanche.

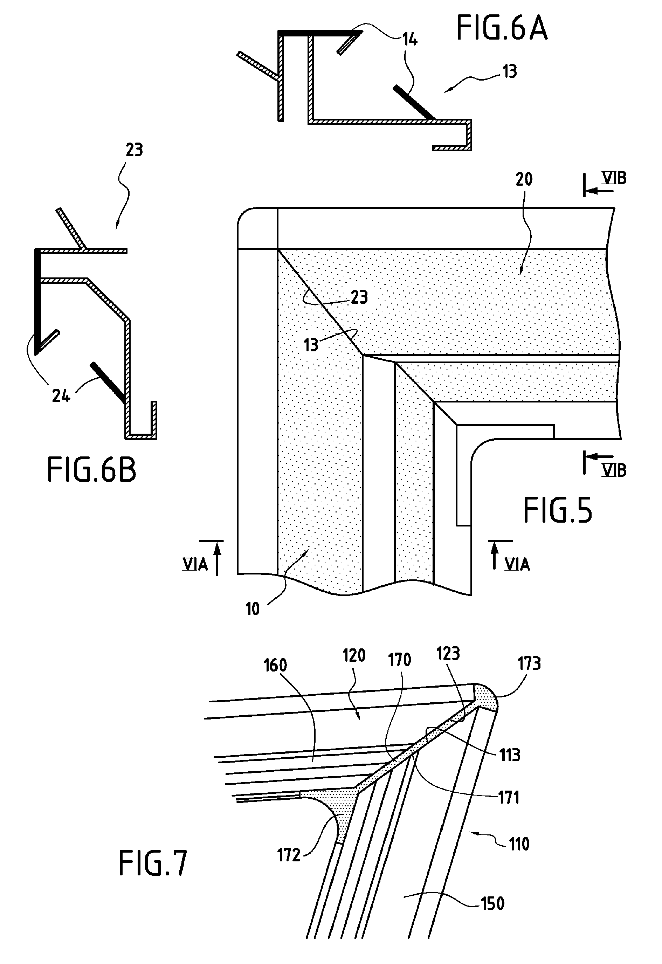

La figure 7 représente deux brins dont la jonction est réalisée selon l'art antérieur pour accommoder un angle dans le cadre sur lequel ils sont montés. Le premier brin 110 et le second brin 120 sont tout d'abord chacun découpés selon un angle donné avec leur axe longitudinal, définissant ainsi une surface de découpe 113 sur le premier brin 110 et une surface de découpe 123 sur le second brin 120. L'angle de découpe du premier brin 110 et l'angle de découpe du second brin 120 sont choisis de telle façon que les surfaces de découpe 113 et 123 soient en contact sur toute la zone d'aspect au niveau de l'angle du cadre où le premier brin 110 et le second brin 120 se rejoignent. Ainsi, dans le cas où les brins 110 et 120 sont identiques (figure 7), les angles de découpe du premier et du second brin sont choisis identiques et égaux à la moitié de l'angle du cadre où le premier et le second brin se rejoignent. La zone d'aspect (région où les deux brins sont en contact) est alors égale à chacune des surfaces de découpe 113 et 123.

Chaque brin peut être composé d'un ou de plusieurs matériaux. Dans le cas de deux matériaux, on peut avoir par exemple des régions en polymère rigide 150, et des régions en polymère souple 160.

Le premier brin 110 et le second brin 120 sont ensuite placés dans un moule (non représenté) et positionnés de telle façon que leurs surfaces de découpe 113 et 123 soient en regard l'une de l'autre et séparées par un espace 171. La jonction est alors réalisée par injection de polymère souple 170 dans le moule dans l'espace 171 entre les deux brins, dans la région interne 172 adjacente à l'espace 171 du côté de l'angle rentrant formé par le premier brin 110 et le second brin 120, et dans la région externe 173 adjacente à l'espace 171 du côté de l'angle saillant formé par le premier brin 110 et le second brin 120. Dans la région interne 172, on injecte juste suffisamment de polymère souple 170 pour raccorder de façon esthétique les bords des surfaces de découpe 113 et 123. Dans la région externe 173, on injecte juste suffisamment de polymère souple 170 pour raccorder de façon esthétique les bords des surfaces de découpe 113 et 123. La jonction est consolidée après refroidissement du polymère souple 170 injecté dans le moule.

La jonction de brins réalisée par injection de polymère souple est fragile, et les manipulations nécessaires au montage des brins 110 et 120 sur leur cadre métallique occasionnent des contraintes (bras de levier) susceptibles de conduire parfois à une rupture de la jonction. Par ailleurs, une différence de teinte apparaît et s'accentue au vieillissement entre une pièce extrudée telle que les brins 110 et 120, et une pièce moulée telle que le joint en polymère souple 170. Cette différence de teinte est esthétiquement indésirable.

La présente invention vise à remédier à ces inconvénients.

L'invention vise à proposer un procédé de jonction de deux brins qui conduit à une jonction plus solide, et moins visible.

Ce but est atteint grâce au fait que le procédé comprend la jonction des surfaces de découpe des deux brins par soudure miroir. Le procédé de soudure miroir consiste à mettre les extrémités de deux pièces, typiquement en polymère ou élastomère, en contact avec une lame chauffée, chaque extrémité étant en contact avec une face différente de la lame. Une fois les extrémités chauffées à la température souhaitée, la lame est retirée, et les extrémités des pièces sont immédiatement appliquées l'une contre l'autre. Après refroidissement, une soudure permanente est réalisée entre les deux pièces.

Grâce à cette disposition, la tenue à l'arrachement de la jonction entre les brins est améliorée. De plus, l'aspect esthétique de la jonction est amélioré puisque les surfaces de découpe de chacun des brins sont directement en contact l'une avec l'autre.

Avantageusement, le procédé comprend après jonction des surfaces de découpe l'ajout de matière à au moins une des extrémités de la soudure miroir. L'ajout de matière peut également avoir lieu dans une région centrale de la soudure miroir.

Cet ajout de matière permet de renforcer la soudure miroir. L'ajout de matière à l'extrémité de la soudure miroir située du côté de l'angle rentrant formé par les deux brins et à l'extrémité de la soudure miroir située du côté de l'angle saillant formé par les deux brins permet également, en formant des surfaces courbées continues entre les bords des deux brins, d'obtenir une meilleure esthétique du raccord entre les deux brins (fermeture des angles entre les deux brins).

Avantageusement, l'ajout de la matière est effectué par injection, ou par multi-injection.

Par exemple, la matière injectée est un thermoplastique souple.

Typiquement, les deux brins soudés par la soudure miroir sont placés dans un moule où le thermoplastique souple est injecté. Cette méthode d'ajout de matière est économique en grande série de production, et est fiable. Elle est donc bien adaptée à la fabrication de joints pour les secteurs de l'automobile et des transports.

Avantageusement, la soudure miroir est réalisée sur toute la section des surfaces de découpe.

Si les deux brins sont identiques et que les angles de découpe du premier et du second brin sont identiques et égaux à la moitié de l'angle du cadre où le premier et le second brin se rejoignent, les surfaces de découpe de chacun des brins sont en contact sur toute leur superficie. La zone d'aspect est donc égale à cette superficie. Si les brins comportent des lèvres, les lèvres d'un brin seront également soudées aux lèvres de l'autre brin situées en regard. La superficie de la soudure miroir est alors maximale, et la résistance de la soudure est donc optimale. Les lèvres pourraient également être injectées.

La soudure miroir peut également être réalisée sur une partie seulement de la section des surfaces de découpe.

Dans le cas où les brins sont de sections différentes, les angles de découpe pourront varier par intervalles le long des surfaces de découpe, les surfaces de découpe ayant ainsi la forme de surfaces planes perpendiculaires à un même plan, qui sont en contact sur la zone d'aspect. Dans ce dernier plan, les surfaces de découpes une fois réunies formeront donc une ligne brisée. Le cas échéant, les surfaces de découpe peuvent être des surfaces non-planes qui sont en contact sur la zone d'aspect. Les surfaces de découpes une fois réunies formeront alors dans un plan qui leur est perpendiculaire une ligne courbe, le long de laquelle les angles de découpe varient. Dans tous les cas, les régions des surfaces de découpe qui ne sont pas en contact peuvent être injectées avec un matériau d'injection.

L'invention sera bien comprise et ses avantages apparaîtront mieux à la lecture de la description détaillée qui suit, d'un mode de réalisation représenté à titre d'exemple non limitatif. La description se réfère aux dessins annexés sur lesquels :
- la figure 1 est une vue de face de deux brins avant jonction,
- la figure 2 est une vue de face d'une jonction entre deux brins réalisée avec un procédé selon l'invention,
- la figure 3 est une coupe transversale selon la ligne III-III de la figure 2,
- les figures 4A à 4G représentent les différentes étapes du soudage miroir des deux brins selon l'invention,
- la figure 5 est une vue de face d'une jonction entre deux brins de sections différentes,
- les figures 6A et 6B sont des coupes transversales selon les lignes VI-A et VI-B de la figure 5, respectivement,
- la figure 7 est une vue de face d'une jonction entre deux brins réalisée avec un procédé selon l'art antérieur.

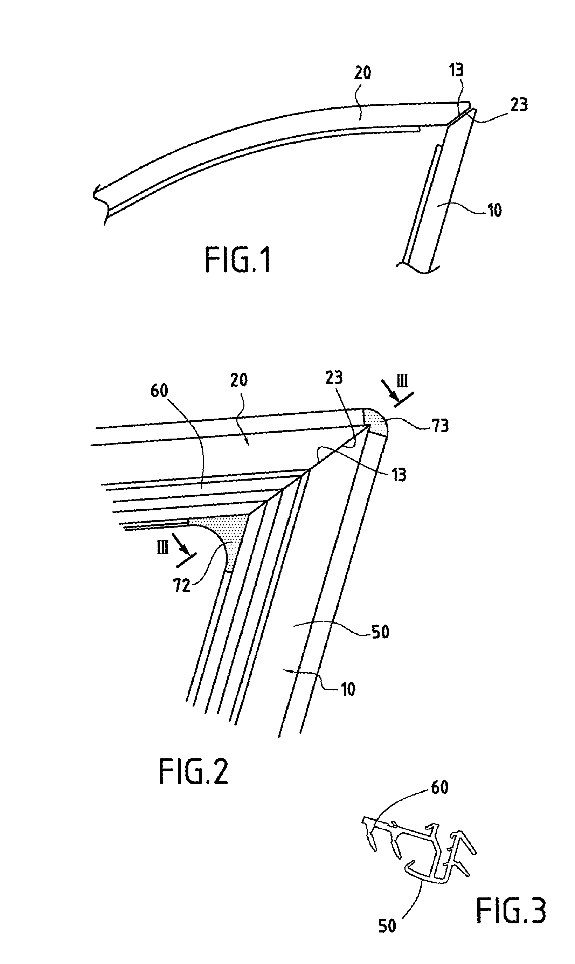

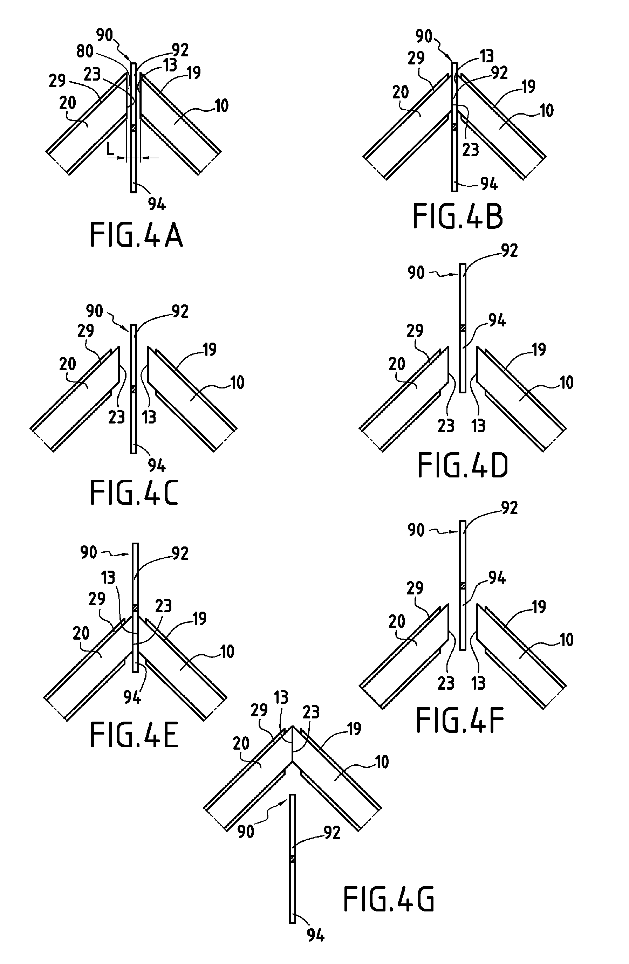

La figure 1 représente un premier brin 10 et un second brin 20 qui sont disposés de façon à épouser la forme du cadre (non représenté) de vitre de portière automobile dans lequel ils sont destinés à être montés. La portière peut être une portière avant ou une portière arrière. Le premier et le second brins sont fabriqués par extrusion ou moulage. Ils sont, dans l'exemple représenté, identiques, et possèdent le profil illustré sur la figure 3, qui sera décrite plus loin.

Le premier brin 10 est coupé selon un angle avec son axe longitudinal (axe d'extrusion), définissant ainsi une première surface de découpe 13. Le second brin 20 est également coupé selon un angle avec son axe longitudinal, définissant ainsi une seconde surface de découpe 23. Le premier brin 10 et le second brin 20 sont coupés de telle façon que lorsqu'ils sont positionnés dans le cadre de portière destiné à les recevoir, la première surface de découpe 13 et la seconde surface de découpe 23 sont en contact l'une de l'autre. Dans le cas présent le premier brin 10 et le second brin 20 sont identiques, par conséquent la première surface de découpe 13 et la seconde surface de découpe 23 possèdent la même géométrie. Par ailleurs, les angles de découpe du premier brin 10 et du second brin 20 sont choisis identiques et égaux à la moitié de l'angle du cadre où le premier brin 10 et le second brin 20 se rejoignent. Dans ce cas, la première surface de découpe 13 et la seconde surface de découpe 23 sont exactement identiques et superposables et sont donc en contact mutuel sur toute leur section (qui constitue donc la zone d'aspect).

La figure 2 représente une jonction entre le premier brin 10 et le second brin 20 réalisée avec un procédé selon l'invention. Après les découpes du premier brin 10 et du second brin 20, la première surface de découpe 13 et la seconde surface de découpe 23 sont jointes par soudure miroir.

Après soudage miroir, de la matière souple est ajoutée afin de renforcer la soudure miroir. Par exemple l'ajout se fait par injection d'un thermoplastique souple dans un moule dans lequel les brins 10 et 20 soudés ont été placés. L'ajout de matière souple peut avoir lieu à l'une des deux extrémités de la soudure miroir, ou aux deux extrémités. L'ajout de matière 72 à l'extrémité de la soudure miroir située du côté de l'angle rentrant formé par le premier brin 10 et par le second brin 20 permet également, en formant une surface courbée continue entre les bords des deux brins, d'obtenir une meilleure esthétique du raccord entre ces deux brins. De même, l'ajout de matière 73 à l'extrémité de la soudure miroir située du côté de l'angle saillant formé par le premier brin 10 et par le second brin 20 forme une surface courbée continue entre les bords des deux brins et permet ainsi d'obtenir un raccord entre les deux brins plus esthétique et moins sensible aux chocs. Dans le cas d'une injection de plusieurs matières, la multi-injection peut être utilisée.

Le procédé de soudure miroir appliqué à la jonction de brins est illustré sur les figures 4A à 4G. Le premier brin 10 est monté sur un premier coulisseau 19 possédant une gorge centrale longitudinale, dans laquelle il peut coulisser. Le second brin 20 est monté sur un second coulisseau 29 possédant une gorge centrale longitudinale, dans laquelle il peut coulisser. L'extrémité du premier coulisseau 19 est biseautée de telle sorte que lorsque l'extrémité du premier brin 10 est translatée dans la gorge du premier coulisseau 19 jusqu'à l'extrémité du premier coulisseau, la première surface de découpe 13 et l'extrémité du premier coulisseau 19 sont situées dans le même plan. De même, l'extrémité du second coulisseau 29 est biseautée de telle sorte que lorsque l'extrémité du second brin 20 est translatée dans la gorge du second coulisseau 29 jusqu'à l'extrémité du second coulisseau, la seconde surface de découpe 23 et l'extrémité du second coulisseau 29 sont situées dans le même plan. Sur la figure 4A, le premier coulisseau 19 muni du premier brin 10 avec sa première surface de découpe 13 positionnée à l'extrémité du premier coulisseau, et le second coulisseau 29 muni du second brin 20 avec sa seconde surface de découpe 23 positionnée à l'extrémité du second coulisseau, sont placés de telle sorte que les extrémités des premier et second coulisseaux soient parallèles et en regard l'une de l'autre, séparées par un espace 80. Une lame 90 plate, d'épaisseur inférieure à la largeur initiale L de l'espace 80 entre la première surface de découpe 13 et la seconde surface de découpe 23, comprenant une portion froide 92 prolongée dans sa direction longitudinale par une portion chaude 94, est insérée dans l'espace 80 entre la première surface de découpe 13 et la seconde surface de découpe 23 de telle sorte qu'une face de la portion froide 92 de la lame 90 soit en regard et parallèle à la première surface de découpe 13 et que la face opposée de la portion froide 92 de la lame 90 soit en regard et parallèle à la seconde surface de découpe 23.

Sur la figure 4B, le premier brin 10 est translaté vers la lame 90 le long de son axe longitudinal jusqu'à ce que la totalité de la première surface de découpe 13 soit en contact avec une face de la portion froide 92 de la lame 90, le premier coulisseau 19 restant immobile. De même, le second brin 20 est translaté vers la lame 90 le long de son axe longitudinal jusqu'à ce que la totalité de la seconde surface de découpe 23 soit en contact avec la face opposée de la portion froide 92 de la lame 90, le second coulisseau 29 restant immobile. Le parallélisme des différentes surfaces est ainsi vérifié.

Sur la figure 4C, le premier brin 10 et le premier coulisseau 19 sont éloignés ensemble de la lame 90 par translation parallèle à l'axe longitudinal du premier coulisseau, et le second brin 20 et le second coulisseau 29 sont éloignés ensemble de la lame 90 par translation parallèle à l'axe longitudinal du second coulisseau.

La lame 90 peut ainsi être translatée longitudinalement de telle façon que sa portion chaude 94 soit positionnée dans l'espace entre la première surface de découpe 13 et la seconde surface de découpe 23, et soit en regard et parallèle à la première surface de découpe 13 et à la seconde surface de découpe 23, comme illustré sur la figure 4D.

Sur la figure 4E, le premier brin 10 est translaté vers la lame 90 le long de son axe longitudinal jusqu'à ce que la première surface de découpe 13 soit en contact avec une face de la portion chaude 94 de la lame 90. De même, le second brin 20 est translaté vers la lame 90 le long de son axe longitudinal jusqu'à ce que la seconde surface de découpe 23 soit en contact avec la face opposée de la portion chaude 94 de la lame 90. Cette configuration est maintenue le temps nécessaire pour chauffer la première et la seconde surface de découpe le temps désiré.

Sur la figure 4F, le premier brin 10 et le premier coulisseau 19 sont éloignés ensemble de la lame 90 par translation parallèle à l'axe longitudinal du premier coulisseau, et le second brin 20 et le second coulisseau 29 sont éloignés ensemble de la lame 90 par translation parallèle à l'axe longitudinal du second coulisseau.

La lame 90 peut ainsi être translatée longitudinalement de façon à ne plus être située dans l'espace entre la première surface de découpe 13 et la seconde surface de découpe 23. Le premier brin 10 est alors translaté le long de son axe longitudinal, et simultanément le second brin 20 est translaté le long de son axe longitudinal jusqu'à ce que la première surface de découpe 13 soit en contact avec la seconde surface de découpe 23, comme illustré sur la figure 4G. La durée entre le moment où les surfaces de découpe sont éloignées de la région chaude 94 de la lame 90 et le moment où elles sont en contact l'une avec l'autre doit être la plus courte possible. La première surface de découpe 13 et la seconde surface de découpe 23 sont maintenues en contact l'une de l'autre jusqu'à leur refroidissement, de façon à créer une jonction permanente entre le premier brin 10 et le second brin 20.

La première surface de découpe 13 et la seconde surface de découpe 23 étant exactement identiques, chaque zone de la première surface de découpe 13 est soudée à la zone de la seconde surface de découpe 23 qui est son symétrique par rapport à la jonction entre le premier brin 10 et le second brin 20.

Comme illustré sur la figure 3, qui représente la première surface de découpe 13 ou la seconde surface de découpe 23, chaque brin est composé d'une ou plusieurs zones en polymère rigide 50, et d'une ou plusieurs zones en polymère souple 60. Ces polymères sont par exemple des thermoplastiques. Certaines parties des zones en polymère souple peuvent être floquées. Après soudage miroir, les zones en polymère rigide d'un des brins sont en contact avec les zones en polymère rigide de l'autre brin, et les zones en polymère souple d'un des brins sont en contact avec les zones en polymère souple de l'autre brin. Les parties de matière ajoutée 72 et 73 de la figure 2 n'ont pas été représentées.

Dans une autre configuration, des zones en polymère rigide pourraient être soudées avec des zones en polymère souple.

La figure 5 représente la jonction entre un premier brin 10 et un deuxième brin 20 dans le cas où ces deux brins sont de sections différentes. La figure 6A représente une coupe transversale du premier brin 10, et la figure 6B une coupe transversale du deuxième brin 20. Les parties de chaque brin qui sont en regard, les parties 14 du premier brin 10 et les parties 24 du deuxième brin 20 sur les figures 6A et 6B respectivement, constituent la zone d'aspect. Ce sont ces parties 14 et 24 qui seront soudées par soudure miroir. L'angle de découpe doit varier par intervalles le long de la première surface de découpe 13 du premier brin 10 et le long de la deuxième surface de découpe 23 du deuxième brin 20 afin que les parties 14 et 24 soient effectivement en regard. Dans le plan perpendiculaire aux surfaces de découpe, les surfaces de découpe une fois réunies forment donc une ligne brisée 7. La lame 90 utilisée pour effectuer la soudure miroir aura alors un profil en escalier suivant la ligne brisée 7.

Le procédé selon l'invention a été décrit dans le cas d'une jonction entre deux brins se rejoignant à l'endroit où le cadre où ils sont destinés à être montés forme un angle. Le procédé s'applique également au cas d'une jonction entre deux brins se rejoignant à un endroit où le cadre est courbé de façon progressive. Le procédé s'applique également au cas d'une jonction entre deux brins se rejoignant à un endroit où le cadre est rectiligne.

## Revendications

1. Procédé pour la réalisation d'une jonction entre deux brins (10, 20) comprenant la découpe de chacun desdits deux brins selon un angle avec son axe longitudinal de façon à obtenir une surface de découpe (13, 23) sur chacun desdits brins, **caractérisé en ce qu'**il comprend la jonction desdites surfaces de découpe des deux brins par soudure miroir.

2. Procédé selon la revendication 1 **caractérisé en ce qu'**il comprend après jonction desdites surfaces de découpe l'ajout de matière à au moins une des extrémités de ladite soudure miroir.

3. Procédé selon la revendication 2 **caractérisé en ce que** l'ajout de ladite matière est effectué par injection.

4. Procédé selon la revendication 3 **caractérisé en ce que** ladite matière injectée est un thermoplastique souple.

5. Procédé selon l'une quelconque des revendications 1 à 4 **caractérisé en ce que** ladite soudure miroir est réalisée sur toute la section des surfaces de découpe.

6. Procédé selon l'une quelconque des revendications 1 à 4 **caractérisé en ce que** ladite soudure miroir est réalisée sur une partie seulement de la section des surfaces de découpe.
